# EUROPEAN PATENT APPLICATION

(11) **EP 1 956 852 A2**
(43) Date of publication of application: **13.08.2008**
(21) Application number: 08075090.4
(22) Date of filing: 06.02.2008
(51) Int. Cl.: H04Q 7/22, H04Q 7/38

(54) **Location information management system, location information management server, and location information management method**

(30) Priority: 08.02.2007 JP 2007029317
(71) Applicant: NEC Corporation, Minato-ku Tokyo (JP)
(72) Inventor: Ko, Yukari, Tokyo (JP)
(74) Representative: Wenzel & Kalkoff

(57) **Abstract**

A location information management system includes at least one mobile terminal (50), a plurality of relay stations (40-1...40-3), and a location information management server (20). The location information management server (20) multicasts a message for inquiring a location of a predetermined mobile terminal (50) to the plurality of relay stations (40-1...40-3) when location information of the mobile terminal is required.

## Description

### RELATED APPLICATIONS

This application is based on Japanese Patent Application No. JP 2007-029317 filed on February 8, 2007, and including a specification, claims, drawings and summary. The disclosure of the above Japanese Patent Application is incorporated herein by reference in its entirety.

### BACKGROUND OF THE INVENTION

### 1. FIELD OF THE INVENTION

The present invention relates to a location information management system, a location information management server and a location information management method.

### 2. DESCRIPTION OF THE RELATED ART

A location information management system which includes at least one mobile terminal, a plurality of relay stations and a location information management server and manages location information of the mobile terminal is known. For example, a typical example of such location information management system is disclosed in Japanese Patent Application Laid-Open No. 1993-167704. When a mobile terminal receives an identification number of a relay station which has a management area including a present location of the mobile terminal, the mobile terminal transmits location information including at least the identification number to a location information management server. The server updates a location information database and the like based on the received location information to manage location information of the mobile terminal. That is, in a configuration mentioned above, the mobile terminal transmits its own location information to the location information management server via a relay station whenever the mobile terminal moves to another management area. On the other hand, the location information management server updates a location information database whenever the mobile terminal moves to another management area. Accordingly, in the configuration mentioned above, it is concerned that a processing load of the mobile terminal and the server may increase and a load on an up-link from the mobile terminal to the server may increase.

Further, Japanese Patent Application Laid-Open No. 2005-026936 discloses a gatekeeper device which receives a registration request from a gateway apparatus that operates in an area to which a mobile terminal moves and updates information of the mobile terminal and the gateway apparatus to manage location information in an integrated manner.

Japanese Patent Application Laid-Open No. 1986-112443 discloses a mobile communication system in which a center station periodically notifies all radio base stations of edit information required for a line control in a broadcast form.

Japanese Patent Application Laid-Open No. 1999-355859 discloses a terminal station which transmits measured location information to a base station using an up-link of a wireless network.

Published Japanese translation of PCT application No. 2004- 502341 discloses a communication system in which an inquiring message from one apparatus to another apparatus is broadcasted.

### SUMMARY OF THE INVENTION

An exemplary object of the present invention is to provide a location information management system which is capable of reducing a processing load of a mobile terminal and a server and reducing a load on a line, a location information management server and a location information management method.

A location information management system according to an exemplary aspect of the invention includes at least one mobile terminal, a plurality of relay stations, and a location information management server. The location information management server multicasts a message for inquiring a location of a predetermined mobile terminal to the plurality of relay stations when location information of the mobile terminal is required.

The location information management system according to an exemplary aspect of the invention includes at least one mobile terminal, a plurality of relay stations, a location information management server, and a multicast server. The location information management server outputs a message for inquiring a location of a predetermined mobile terminal when location information of the predetermined mobile terminal is required. The multicast server receives the location inquiring message from the location information management server and multicasts the location inquiring message to the plurality of relay stations.

The location information management server according to an exemplary aspect of the invention includes a transmission unit, a reception unit, and an update unit. The transmission unit multicasts a location inquiring message for inquiring a location of a predetermined mobile terminal to a plurality of relay stations when location information of the predetermined mobile terminal is required. The reception unit receives a response message to the location inquiring message from the predetermined mobile terminal. The update unit updates location information of the predetermined mobile terminal according to the response message.

A method for managing location information of a mobile terminal according to an exemplary aspect of the invention includes multicasting a location inquiring message for inquiring a location of a predetermined mobile terminal to a plurality of relay stations from a location information management server when location information on the mobile terminal is required. The method also includes transmitting the location inquiring message to all mobile terminals in a communication zone which each of the plurality of relay stations covers when each of the plurality of relay stations receives the location inquiring message from the location information management server. The method also includes transmitting a response message to the location inquiring message from the predetermined mobile terminal to the location information management server via a relay station when the predetermined mobile terminal exists in a communication zone which the plurality of relay station covers. The method still further includes updating location information of the predetermined mobile terminal according to the response message.

### BRIEF DESCRIPTION OF THE DRAWINGS

Exemplary features and advantages of the present invention will become apparent from the following detailed description when taken with the accompanying drawings in which:
Fig. 1 is an example of a control block diagram of a location information management system according to a first exemplary embodiment of the present invention;
Fig. 2 is an example of a control block diagram of the location information management server shown in Fig. 1.
Fig. 3 is an example of a sequence diagram showing operation of a location information management system according to a first exemplary embodiment of the present invention;
Fig. 4 is an example of a control block diagram of a location information management system according to a second exemplary embodiment of the present invention;
Fig. 5 is an example of a sequence diagram showing operation of a location information management system according to a second exemplary embodiment of the present invention;
Fig. 6 is an example of a control block diagram of a location information management system according to a fourth exemplary embodiment of the present invention;
Fig. 7 is an example of a sequence diagram showing operation of a location information management system according to a fourth exemplary embodiment of the present invention;
Fig. 8 is an example of a control block diagram of a location information management system according to a fifth exemplary embodiment of the present invention; and
Fig. 9 is an example of a sequence diagram showing operation of a location information management system according to a fifth exemplary embodiment of the present invention.

### DETAILED DESCRIPTION OF THE EXEMPLARY EMBODIMENTS

A location information management system according to a typical exemplary embodiment of the present invention includes at least one mobile terminal, a plurality of relay stations and a location information management server. When location information of a predetermined mobile terminal is required due to an occurrence of data to be transmitted, the location information management server multicasts a message for inquiring a location of the mobile terminal to a plurality of relay stations. As a multicasting, for example, MBS (Multicast-Broadcast-System) in WiMAX (Worldwide Interoperability for Microwave Access) and IEEE802.16e standard specification may be used. Further, the above location inquiring message includes identification information for identifying the mobile terminal. As identification information, for example, a unique destination address for each mobile terminal can be used.

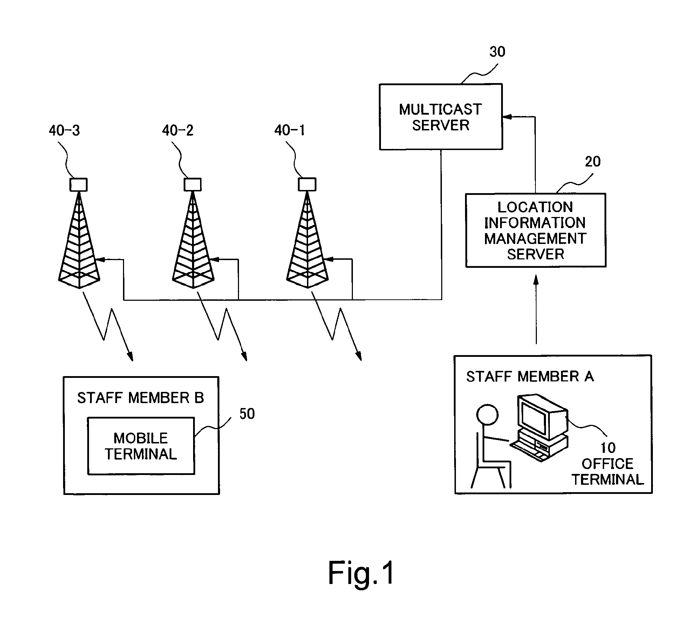

Fig. 1 is a block diagram illustrating control of a location information management system according to a first exemplary embodiment of the present invention. The location information management system is used for identifying a location of a staff member who is out by a staff member who works in an office. The location information management system includes an office terminal 10, a location information management server 20, a multicast server 30, a plurality of relay stations 40-1 to 40-3 and a mobile terminal 50. Further, the number of the relay stations may be two, or equal to or more than four.

The office terminal 10 is operated by a staff member A who works in an office. The location information management server 20 receives, from the office terminal 10, a request for requesting location information of a staff member B who is out. The location information management server 20 transmits a message for inquiring a location of a mobile terminal 50 (a location of the staff member B) to the multicast server 30. On the other hand, the location information management server 20 receives a response message to the location inquiring message from the mobile terminal 50 via any one of the relay stations 40-1 to 40-3. The location information management server 20 includes a database (not illustrated) for managing location information for each of the mobile terminals. The location information management server 20 stores the location information of the mobile terminals in the database and also updates a content of the database when the location information changes.

The multicast server 30 receives the location inquiring message from the location information management server 20 and multicasts the received location inquiring message to each of a plurality of relay stations 40-1 to 40-3.

Upon receiving the location inquiring message from the multicast server 30, each of the plurality of relay stations 40-1 to 40-3 transmits the location inquiring message to all mobile terminals in a communication zone which each of the relay stations covers. When the mobile terminal 50 exists in the communication zone which each of the plurality of relay stations 40-1 to 40-3 covers, each of the plurality of relay stations receives a response message to a location inquiring message from the mobile terminal 50 and transmits the response message to the location information management server 20. The mobile terminal 50 carried by the staff member B who is out communicates with the relay stations 40-1 to 40-3 with wireless communication.

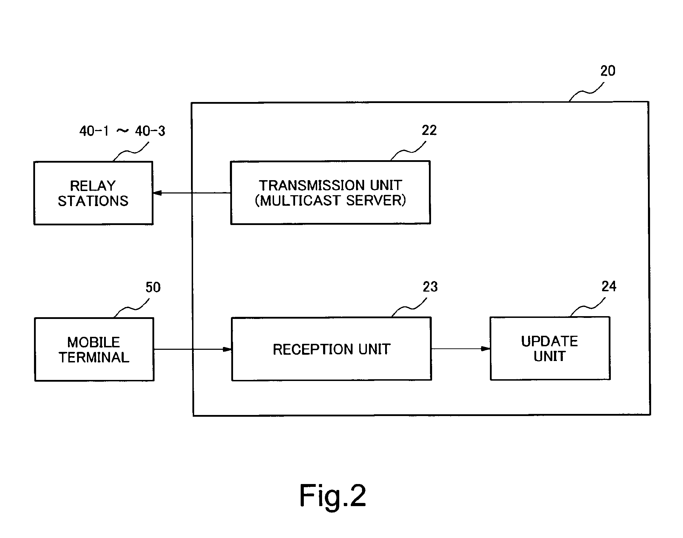

Fig. 2 is a block diagram illustrating control of the location information management server 20 shown in Fig. 1. The location information management server 20 includes a transmission unit 22, a reception unit 23, and an update unit 24. The transmission unit 22 multicasts the location inquiring message for inquiring a location of a predetermined mobile terminal 50 to a plurality of relay stations 40-1 to 40-3 when location information of the predetermined mobile terminal 50 is required. The reception unit 23 receives the response message to the location inquiring message from the predetermined mobile terminal 50. The update unit 24 updates location information of the predetermined mobile terminal 50 according to the response message. For example, the transmission unit 22 can be the multicast server 30.

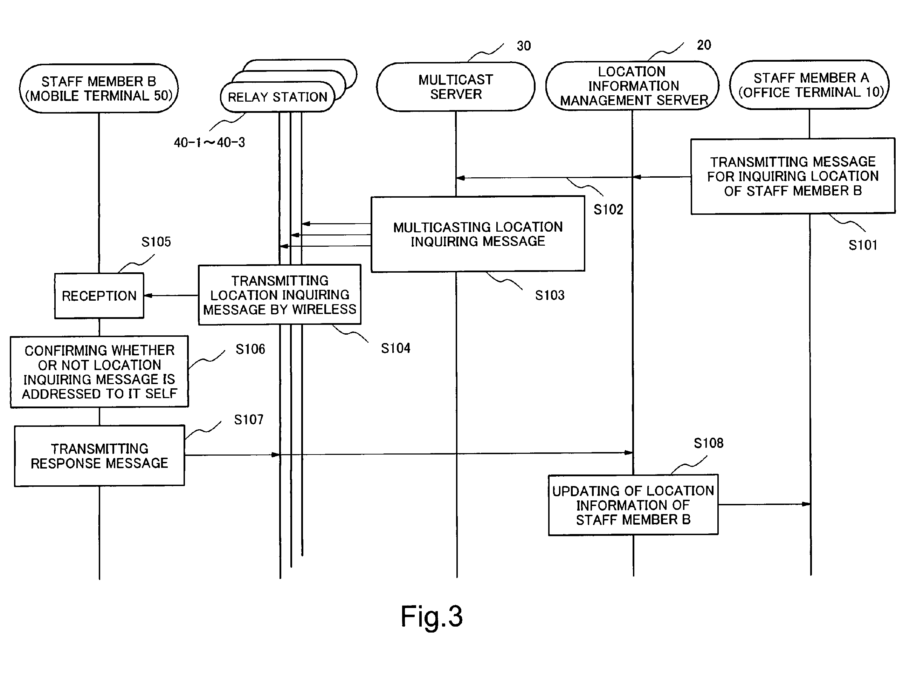

Fig. 3 is a sequence diagram showing an operation of the location information management system according to the first exemplary embodiment of the present invention. According to an operation of the staff member A who works in the office, a message to inquire a current location of the staff member B who is out is transmitted to the location information management server 20 from the office terminal 10 (step S101). The location information management server 20 transmits the location inquiring message to the multicast server 30 (step S102). The multicast server 30 multicasts the location inquiring message to each of the relay stations 40-1 to 40-3 (step S103).

Each of the relay stations 40-1 to 40-3 transmits the location inquiring message to all mobile terminals in a communication zone which each of the relay stations covers by wireless (step S104). All mobile terminals which exist in the communication zone which each of the relay stations 40-1 to 40-3 covers receive the location inquiring message (step S105).

The mobile terminal 50 confirms whether or not the location inquiring message is addressed to itself (step S106). At that time, reading the location inquiring message displayed on a screen, the staff member B who carries the mobile terminal 50 can confirm whether or not the location inquiring message is addressed to himself / herself. The mobile terminal 50 transmits a response message to the location inquiring message to the location information management server 20 via a relay station which covers a communication zone where the mobile terminal 50 is located (step S107).

The location information management server 20 receives the response message from the mobile terminal 50 and updates location information on the staff member B (mobile terminal 50) (step S108). Additionally, the location information management server 20 transmits the location information on the staff member B to the office terminal 10, if needed.

In the first exemplary embodiment of the present invention described above, when location information on a predetermined mobile terminal is required due to an occurrence of data to be transmitted, the location information management server 20 multicasts the message for inquiring a location of the mobile terminal 50 to the plurality of relay stations 40-1 to 40-3. That is, the location information is transmitted from the mobile terminal 50 to the location information management server 20 only when the location information is required. Accordingly, the mobile terminal 50 does not need to report the location information to the location information management server 20 whenever the mobile terminal 50 moves to another management area. The number of times of updating processes of the location information in the location information management server 20 can be reduced. Accordingly, a processing load of the mobile terminal 50 and the location information management server 20 and a load on an up-link from the mobile terminal 50 to the location information management server 20 are reduced. As for the mobile terminal, a long-term standby state and reduction of consumption power are achieved based on reduction of a processing load.

When multicast data is transmitted, MBS in WiMAX and IEEE802.16e standard specification establishes synchronization between the relay stations. Accordingly, even when the mobile terminal 50 moves among relay stations 40-1 to 40-3 at high speed, the mobile terminal 50 may reliably receive the location inquiring message.

The first exemplary embodiment of the present invention described above can be applied to a mobile telephone system. When a call arrives, a network side system multicasts mobile phone location inquiring information by MBS to one or more base stations. As a result, since the mobile phone does not need to report its own location information whenever the mobile phone moves to another area, the mobile telephone system may efficiently operate.

The first exemplary embodiment of the present invention described above can be applied to management of location information of a communication apparatus not only in a wireless communication system but also in a wire communication system. For example, when a communication terminal moves along with transfer of a staff member in a company, the location information of the communication terminal that has been moved can be managed by the location information management system mentioned above.

Further, the office terminal 10 can be for example, a workstation, a personal computer (PC), a mobile phone or a PDA (Personal Digital Assistants). The office terminal 10 can be a wire or wireless communication apparatus.

When access to the location information management server 20 is limited to only staff members by using, for example, a password, security is preferably improved.

The relay stations 40-1 to 40-3 are typically base stations. The relay station can be, for example, a repeater such as a router, a server, or an exchange which can communicate with the mobile terminal 50 via a base station. Additionally, the relay stations 40-1 to 40-3 can be communication satellites.

The mobile terminal 50 can be, for example, a mobile phone, a PDA, a computer which can perform wireless communication, a handy terminal, a portable game machine, a portable audio player and a wearable computer. The mobile terminal 50 is not limited to portable devices mentioned above. For example, the mobile terminal can be a car navigation system or an ETC (Electronic Toll Collection) unit mounted on a vehicle or the like. The mobile terminal 50 does not need to be a communication terminal. The mobile terminal 50 can be for example, a communication interface used for a wireless communication such as a wireless LAN (Local Area Network) card.

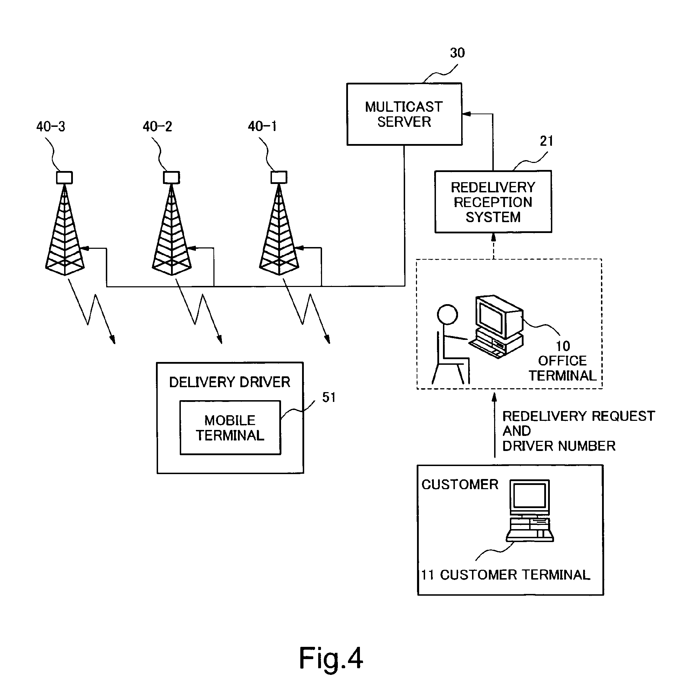

Fig. 4 is a block diagram illustrating a location information management system according to a second exemplary embodiment of the present invention. The location information management system is for example, a system used by a home-delivery company and more specifically, a system for receiving a redelivery request from a customer (hereinafter, the system may also be called a redelivery request reception system). The location information management system includes a customer terminal 11, a redelivery reception system 21, a multicast server 30, a plurality of relay stations 40-1 to 40-3 and a mobile terminal 51. The redelivery reception system 21 corresponds to the location information management server 20 shown in Fig. 1.

The customer terminal 11 is operated by a customer who uses the home-delivery company or a shop assistant of a store who receives a request from a customer. The customer terminal 11 transmits, to the redelivery reception system 21, a redelivery request including a delivery driver number that is described in a delivery notification that is mailed during absence.

The redelivery reception system 21 receives a redelivery request from the customer terminal 11. The redelivery reception system 21 transmits, to the multicast server 30, a location inquiring message for inquiring location information on the mobile terminal 51 carried by a driver corresponding to a delivery driver number.

The multicast server 30 receives the location inquiring message from the redelivery reception system 21 and multicasts the received location inquiring message to each of the plurality of relay stations 40-1 to 40-3.

When receiving the location inquiring message from the multicast server 30, each of the plurality of relay stations 40-1 to 40-3 transmits the location inquiring message to all mobile terminals in communication zones which each of the relay stations covers. When the mobile terminal 51 exists in a communication zone which each of the plurality of relay stations 40-1 to 40-3 covers, each of the plurality of relay stations receives a response message to the location inquiring message from the mobile terminal 51 and transmits the response message to the location information management server 21. The mobile terminal 51 is carried by a delivery driver and communicates with the relay stations 40-1 to 40-3 by wireless.

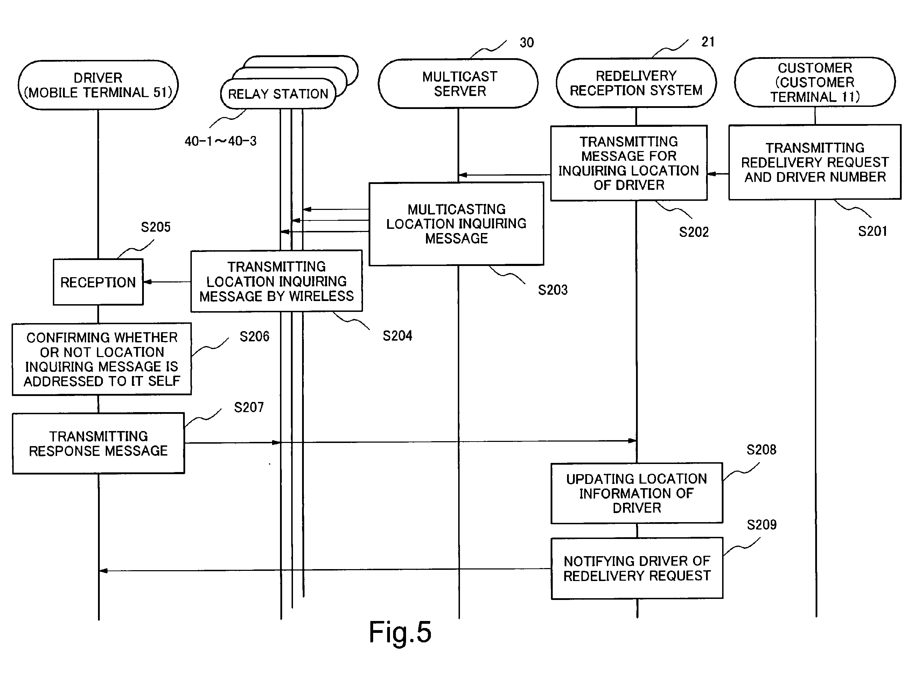

Fig. 5 is a sequence diagram showing an example of operation of a location information management system according to the second exemplary embodiment of the present invention. A customer transmits a redelivery request from the customer terminal 11 to the redelivery reception system 21 of a home-delivery company (step S201). The redelivery request includes a delivery driver number that is described in a delivery notification that is mailed during absence.

The redelivery reception system 21 receives the redelivery request from the customer terminal 11. The redelivery reception system 21 transmits a location inquiring message for inquiring location information on the mobile terminal 51 carried by a driver corresponding to a delivery driver number to the multicast server 30 (step S202).

The multicast server 30 receives the location inquiring message from the redelivery reception system 21 and multicasts the received location inquiring message to each of the plurality of relay stations 40-1 to 40-3 (step S203).

Upon receiving the location inquiring message from the multicast server 30, each of the plurality of relay stations 40-1 to 40-3 transmits the location inquiring message to all mobile terminals in a communication zone which each of the relay stations covers (step S204).

All mobile terminals which exist in a communication zone which each of the relay stations 40-1 to 40-3 covers receive the location inquiring message (step S205).

The mobile terminal 51 confirms whether or not the location inquiring message is addressed to itself (step 5206). Then, by the location inquiring message displayed on a screen of the mobile terminal 51, a staff member B who carries the mobile terminal 51 can confirm whether or not the location inquiring message is addressed to himself / herself. The mobile terminal 51 transmits a response message to the location inquiring message to the location information management server 20 via a relay station covering a communication zone in which the mobile terminal is located (step S207).

The redelivery reception system 21 receives the response message from the mobile terminal 51 and updates location information on a delivery driver (step S208). The redelivery reception system 21 transmits information about a redelivery request to the mobile terminal 51 carried by the delivery driver via a relay station covering the communication zone in which the mobile terminal 51 is located (step S209).

Further', the customer terminal 11 can be for example, a PC, a mobile phone or a fixed telephone. The customer terminal 11 need not necessarily be owned by a customer itself. The customer terminal 11 can be, for example, a communication apparatus installed in a store. The customer terminal 11 can use a wire or wireless communication system. A redelivery request is orally performed by using a telephone or the like without using the customer terminal 11.

The office terminal 10 indicated by a broken line in Fig. 4 can be placed between the customer terminal 11 and the redelivery reception system 21. The office terminal 10 itself can be a terminal which receives a redelivery request from a customer. For example, the office terminal 10 is installed in a call center. An operator in the call center receives the redelivery request from the customer by using a telephone. The operator transmits the redelivery request from the office terminal 21 to the redelivery reception system 21.

The mobile terminal 51 can be, for example, a mobile phone, a PDA, a computer of which a wireless communication is available, a handy terminal, a portable game machine and a portable audio player. The mobile terminal 51 is not necessarily limited to portable devices mentioned above. For example, the mobile terminal 51 can be a car navigation system or an ETC unit mounted on a vehicle or the like. The mobile terminal 51 does not need to be a communication terminal itself. The mobile terminal 51 can be, for example, a communication interface used for a wireless communication such as a wireless LAN card.

A location information management system according to a third exemplary embodiment of the present invention will be described. In a description mentioned above, a case that a mobile terminal makes a response is described, but in practice, a communication device other than a mobile terminal can make a response. For example, a communication device in facilities where a staff member who is out or a delivery driver drops in can be used instead of a relay station or a mobile terminal. The facilities may be, for example, another business establishment or business office, a convenience store, a coffee shop, a restaurant, a hotel, transportation facilities, public facilities or an ETC lane. When a staff member or a delivery driver uses a communication device in the facilities, the communication device records their identification information and a date and time of their stay. When receiving a location inquiring request for inquiring location information on the member or the driver from a location information management server, the communication device in the facilities transmits a response message including location information, identification information and date/time information to the location information management server. As a result, the location information management server can grasp not only a current location of the staff member or the delivery driver but also a migration pathway. A method for managing such date and time information can be used together with the first exemplary embodiment or the second exemplary embodiment.

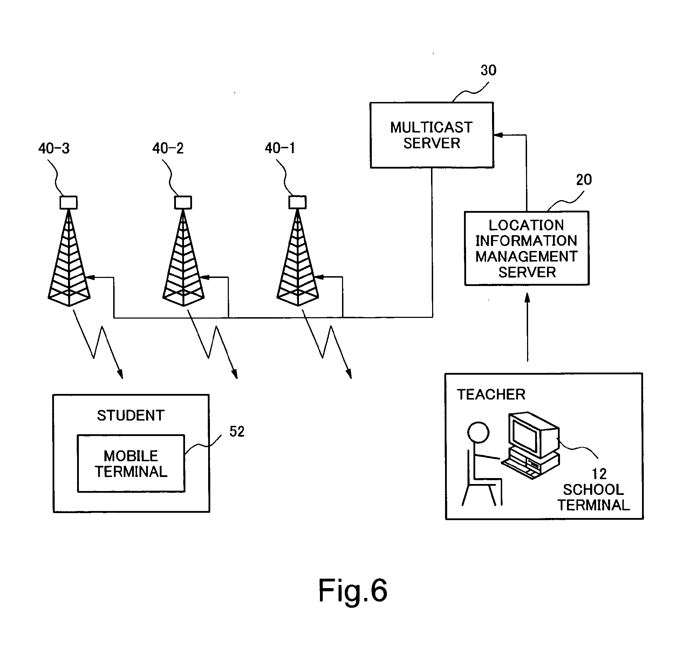

Fig. 6 is a block diagram of a location information management system according to a fourth exemplary embodiment of the present invention. The location information management system is, for example, a system used at school, more specifically, a system for collecting information about a current location of students who are performing after-school activities here and there. The location information management system includes a school terminal 12, a location information management server 20, a multicast server 30, a plurality of relay stations 40-1 to 40-3 and a mobile terminal 52.

The school terminal 12 is arranged in a school and operated by teachers or the like. The school terminal 12 requests student location information to the location information management server 20.

The location information management server 20 receives a location information request for requesting location information on a specific student during an after-school activity from the school terminal 12. The location information management server 20 transmits a message for inquiring a location of the mobile terminal 52 carried by the student to the multicast server 30. The location information management server 20 receives a response message to the location inquiring message from the mobile terminal 52 via any one of the relay stations 40-1 to 40-3. The location information management server 20 includes a database (not illustrated) for managing location information for each of the mobile terminals. The location information management server 20 stores location information of a mobile terminal in the database and also updates a content of the database when location information changes.

The multicast server 30 receives the location inquiring message from the location information management server 20 and multicasts the received location inquiring message to each of the plurality of relay stations 40-1 to 40-3.

When receiving the location inquiring message from the multicast server 30, each of the plurality of relay stations 40-1 to 40-3 transmits the location inquiring message to all mobile terminals in a communication zone which each of the relay stations covers. When the mobile terminal 52 as a search target exists in a communication zone which each of the plurality of relay stations 40-1 to 40-3 covers, each of the plurality of relay stations receives a response message from the mobile terminal 52 and transmits the response message to the location information management server 20. The mobile terminal 52 carried by a student communicates with the relay stations 40-1 to 40-3 by wireless. The mobile terminal 52 receives the location inquiring message from the relay stations 40-1 to 40-3. The mobile terminal 52 transmits the response message to the location inquiring message to the relay stations 40-1 to 40-3 when the location inquiring message is addressed to the mobile terminal 52.

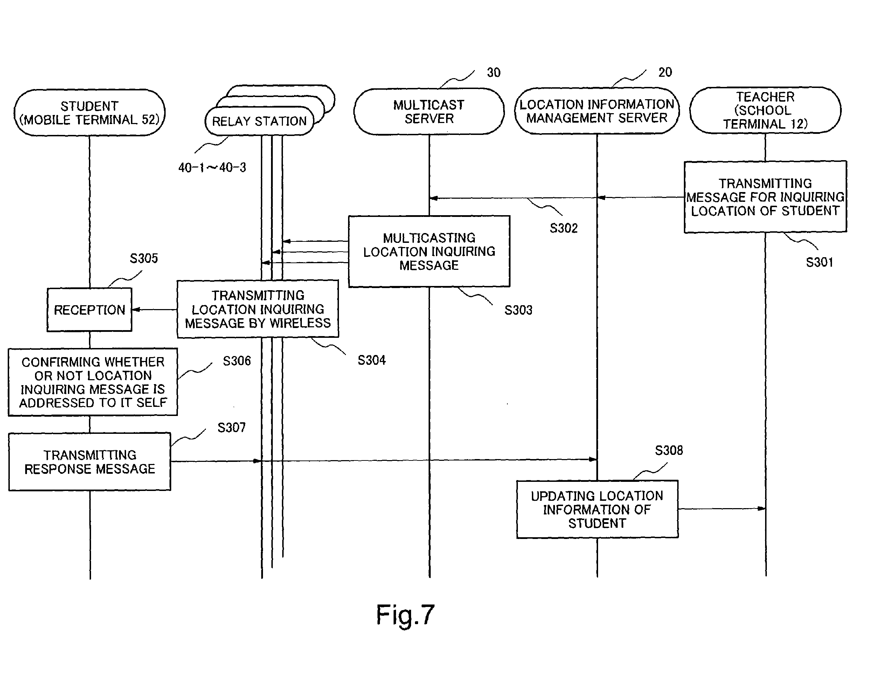

Fig. 7 is a sequence diagram showing an example of operation of the location information management system according to the fourth exemplary embodiment of the present invention. By an operation of a teacher in a school, a message for inquiring a current location of a student during after-school activities is transmitted to a location information management server 20 from a school terminal 12 (step S301).

The location information management server 20 transmits the location inquiring message to a multicast server 30 (step S302). The multicast server 30 multicasts the location inquiring message to each of the relay stations 40-1 to 40-3 (step S303).

Each of the relay stations 40-1 to 40-3 transmits the location inquiring message which is multicast to all mobile terminals in a communication zone covered by each of the relay stations (step S304).

All mobile terminals in a communication zone which each of the relay stations 40-1 to 40-3 covers receive the location inquiring message (step S305). The mobile terminal 52 confirms whether or not the location inquiring message is addressed to itself (step S306). Then, by the location inquiring message displayed on a screen of the mobile terminal 52, a student who carries the mobile terminal 52 can confirm whether or not a location inquiring message is addressed to himself / herself. The mobile terminal 52 transmits a response message to the location inquiring message to the location information management server 20 via a relay station covering a communication zone in which the mobile terminal is located (step S307).

The location information management server 20 receives the response message from the mobile terminal 52 and updates location information of a student (mobile terminal 52) (step S308). The location information management server 20 transmits the location information of a student to the school terminal 12, if needed.

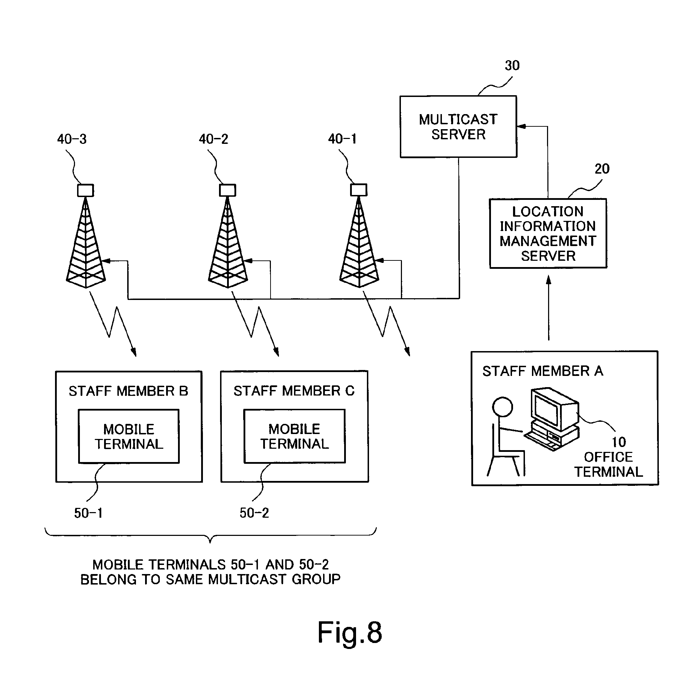

Further, in the first to fourth exemplary embodiments mentioned above, the case in which a current location of one mobile terminal is identified is described as examples. Similarly, current locations of a plurality of mobile terminals can also be identified. Fig. 8 is a block diagram of a location information management system according to a fifth exemplary embodiment of the present invention. In the system, current locations of a plurality of mobile terminals are identified. The location information management system is, for example, a system used by a company, more specifically, a system for identifying a current location of a staff member who is out. Further, the exemplary embodiment can also be applied to a system (redelivery request reception system) of the second exemplary embodiment and a system (student safety management system) of the fourth exemplary embodiment.

The location information management system includes an office terminal 10, a location information management server 20, a multicast server 30, a plurality of relay stations 40-1 to 40-3 and a plurality of mobile terminals 50-1 to 50-2. Further, for convenience, a description will be made with respect to two mobile terminals. However the system can also be applied to a case in which three or more mobile terminals are used. In Fig. 8, the same reference mark is used for the same components as shown in Fig.1, and the description is omitted.

The mobile terminal 50-1 is carried by a staff member B who is out. The mobile terminal 50-2 is carried by a staff member C who is out. The mobile terminals 50-1 and 50-2 form a multicast group having a predetermined multicast group address.

Upon reception of a location information request for requesting location information of the staff member B and the staff member C from the office terminal 10, the location information management server 20 transmits, to the multicast server 30, a location inquiring message addressed to the multicast group to which the mobile terminals 50-1 and 50-2 belong. The multicast server 30 multicasts the location inquiring message to each of the relay stations 40-1 to 40-3.

Each of the relay stations 40-1 to 40-3 transmits the multicast location inquiring message to all mobile terminals in a communication zone which each of the relay stations covers. When receiving a response message to the location inquiring message which the mobile terminal transmits, any one of the relay stations 40-1 to 40-3 transmits the response message to the location information management server 20.

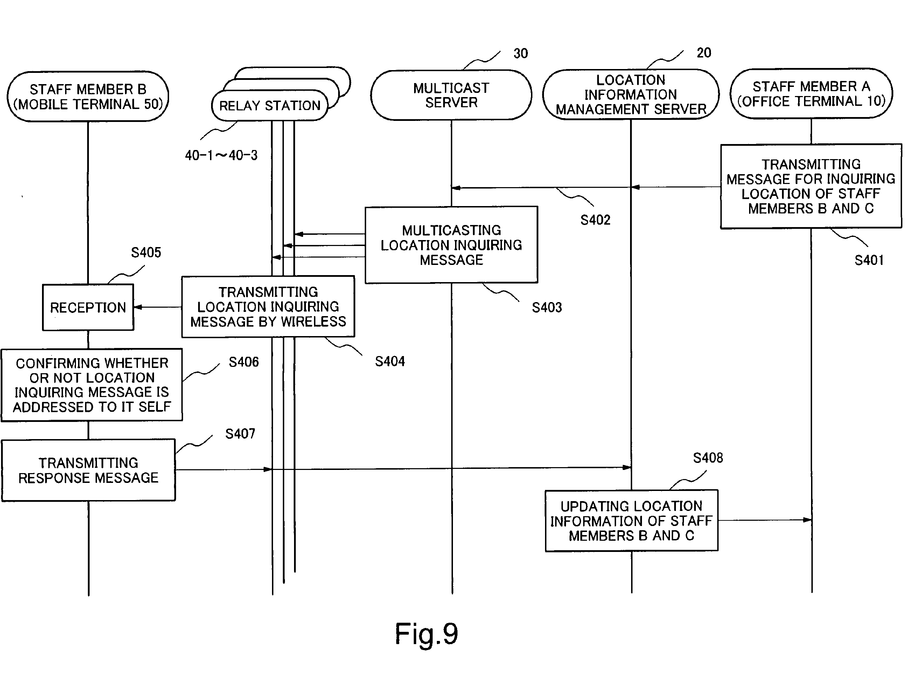

Fig. 9 is a sequence diagram showing an example of operation of a location information management system according to the fifth exemplary embodiment of the present invention. Further, in Fig. 9, a description of the same processing as shown in Fig.3 will be simplified or omitted according to need.

According to an operation of the staff member A who works in a company, a message for inquiring current locations of the mobile terminal 50-1 carried by the staff member B who is out and the mobile terminal 50-2 carried by the staff member C who is out is transmitted to the location information management server 20 from the office terminal 10 (step S401).

The location information management server 20 transmits the location inquiring message to the multicast server 30 (step S402). The multicast server 30 multicasts the location inquiring message to each of the relay stations 40-1 to 40-3 (step S403). Each of the relay stations 40-1 to 40-3 transmits the location inquiring message to all mobile terminals in the communication zone which each of the relay stations covers by wireless (step S404).

All mobile terminals in the communication zone which each of the relay stations 40-1 to 40-3 covers receive the location inquiring message (step S405). Here, since a destination address of the location inquiring message is the multicast group address given to a group including the mobile terminals 50-1 and 50-2 as mentioned above, the mobile terminals 50-1 and 50-2 confirm whether or not the location inquiring message is addressed to itself (step 5406).

The mobile terminals 50-1 and 50-2 transmit the response message to the location inquiring message to the location information management server 20 via a relay station covering the communication zone in which the mobile terminal is located (step S407). In the case, for example, as shown in Fig. 8, the mobile terminal 50-1 is covered by the relay station 40-3 and the mobile terminal 50-2 is covered by the relay station 40-2. Accordingly, the response message from the mobile terminal 50-1 is transmitted to the location information management server 20 via the relay station 40-3. The response message from the mobile terminal 50-2 is transmitted to the location information management server 20 via the relay station 40-2.

The location information management server 20 receives the response message from the mobile terminals 50-1 and 50-2 and updates location information of the staff member B (mobile terminal 50-1) and the staff member C (mobile terminal 50-2) (step S408).

In the fifth exemplary embodiment described above, location information of each of the staff members who go out (mobile terminals) can be simultaneously obtained by one confirming operation. Accordingly, operator's burden and system load can be reduced.

Further, a multicast system is not limited to MBS in WiMAX and IEEE802.16e standard specification mentioned above, and other multicast systems can be used. Further, in other multicast systems, by establishing synchronization of multicast data transmission among a plurality of relay stations, a failure of data reception in a terminal moving between the relay stations can be decreased as well as MBS.

A location information management system according to a sixth exemplary embodiment of the present invention includes: a location information management server which multicasts a location inquiring message for inquiring location information of a specific person to a plurality of relay stations when location information of the specific person is required and updates the location information of the specific person based on a response message to the location inquiring message; a relay station which receives the location inquiring message from the location information management server and notifies a communication terminal in a communication zone which the relay station covers of the location inquiring message; and a mobile terminal which is carried by the specific person receives the location inquiring message from the relay station and transmits a response message to the location information management server when it is confirmed that the location inquiring message is addressed to the mobile station.

In a location information management system according to a seventh exemplary embodiment of the present invention, when a location information management server receives a request for requesting location information on a second staff member (staff member B) who is out from a first staff member (staff member A) in an office via an office terminal, the server multicasts a location inquiring message on a mobile terminal carried by the second staff member (staff member B).

In a location information management system according to an eighth exemplary embodiment of the present invention, when a location information management server receives a redelivery request and a driver number from a customer via a customer terminal, the server multicasts a location inquiring message on a mobile terminal carried by a driver corresponding to the driver number, and when a response message to the location inquiring message is received, the server notifies the mobile terminal carried by the driver of the redelivery request.

A location information management system according to the eighth exemplary embodiment of the present invention includes: a location information management server which outputs a location inquiring message for inquiring location information of a specific mobile terminal when location information of the specific mobile terminal is required, and updates location information of the specific mobile terminal according to a response message to the location inquiring message; and a multicast server which receives the location inquiring message from the location information management server and multicasts the location inquiring message to a plurality of relay stations. When a specific mobile terminal exists in any of the communication zones which a plurality of relay stations cover, the location information management server receives the response message from the specific mobile terminal.

A location information management method according to a ninth exemplary embodiment of the present invention includes: (a) a step for receiving a request for requesting location information of a specific mobile terminal; (b) a step for multicasting a location inquiring message for inquiring location information on the specific mobile terminal to a plurality of relay stations; (c) a step for receiving a response message from the specific mobile terminal when the specific mobile terminal exists in any of the communication zones which a plurality of relay stations cover; and (d) a step for updating location information of the specific mobile terminal according to the response message to the location inquiring message.

In a location information management method according to a tenth exemplary embodiment of the present invention, in the step (c) above described, each of a plurality of relay stations receives a location inquiring message and notifies, a communication terminal in a communication zone which each of the relay stations covers of the location inquiring message; a specific mobile terminal receives the location inquiring message from any of a plurality of relay stations and outputs a response message when it is confirmed that the location inquiring message is addressed to the terminal.

A location information management method according to an eleventh exemplary embodiment of the present invention includes the steps (a) to (d) and further includes: (e) a step for receiving a driver number that indicates a driver (delivery man) carrying a specific mobile terminal along with a redelivery request from a customer; and (f) a step for notifying the specific mobile terminal of the redelivery request after receiving a response message from the specific mobile terminal.

A program according to a twelfth exemplary embodiment of the present invention causes a computer to perform any of the location information management methods mentioned above.

According to each exemplary embodiment described above, a mobile terminal transmits location information as a response only when the mobile terminal receives a location inquiring message addressed to itself, except for a time of the response, the terminal can maintain a standby state. Therefore, a power consumption of the mobile terminal can be largely reduced. Additionally, because the number of transmission of location information from a mobile terminal to a server via a relay station is considerably reduced, use efficiency of a wireless up-link from a mobile terminal station to a relay station increases. Furthermore, because a synchronization between a plurality of relay stations is established and the same multicast data are transmitted, the number of failures of data reception is reduced even when a mobile terminal moves between relay stations, and use efficiency of a wireless downlink from a relay station to a mobile terminal is improved.

The previous description of embodiments is provided to enable a person skilled in the art to make and use the present invention. Moreover, various modifications to these embodiments will be readily apparent to those skilled in the art, and the generic principles and specific examples defined herein may be applied to other embodiments without the use of inventive faculty. Therefore, the present invention is not intended to be limited to the embodiments described herein but is to be accorded the widest scope as defined by the limitations of the claims and equivalents.

Further, it is noted that the inventor's intent is to retain all equivalents of the claimed invention even if the claims are amended during prosecution.

## Claims

1. A location information management system comprising:
at least one mobile terminal;
a plurality of relay stations; and
a location information management server which multicasts a message for inquiring a location of a predetermined mobile terminal to said plurality of relay stations when location information of said mobile terminal is required.

2. The location information management system according to claim 1, wherein
when receiving said location inquiring message from said location information management server, each of said plurality of relay stations transmits said location inquiring message to all said mobile terminals in a communication zone which each of said relay stations covers,
when a predetermined mobile terminal thereof exists in a communication zone which said relay station covers, each of said plurality of relay stations receives a response message to said location inquiring message from said predetermined mobile terminal and transmits the response message to said location information management server.

3. The location information management system according to claims 1 or 2, wherein
said location inquiring message includes identification information for identifying said predetermined mobile terminal.

4. The location information management system according to claim 3, wherein
said identification information is a multicast group address which is given to a multicast group including said predetermined mobile terminal.

5. The location information management system according to claims 1 to 4, wherein
when receiving a request for requesting location information on a person who is out from another person in an office, said location information management server multicasts said location inquiring message for inquiring location information on a mobile terminal carried by said person who is out to said plurality of relay stations.

6. The location information management system according to claims 1 to 4, wherein
when receiving a redelivery request including a delivery driver number from a customer, said location information management server multicasts said location inquiring message for inquiring location information on a mobile terminal carried by said delivery driver to said plurality of relay stations, and
when a response message to said location inquiring message is received, said location information management server notifies said mobile terminal of said redelivery request.

7. The location information management system according to claims 1 to 4, wherein
when receiving a student location information request from a school teacher, said location information management server multicasts said location inquiring message for inquiring location information of a mobile terminal carried by said student to said plurality of relay stations.

8. The location information management system according to claims 1 to 7, wherein
said multicasting is performed by using MBS (Multicast-Broadcast-System) in WiMAX (Worldwide Interoperability for Microwave Access) and IEEE802.16e standard specification.

9. The location information management system comprising:
at least one mobile terminal;
a plurality of relay stations;
a location information management server which outputs a message for inquiring a location of a predetermined mobile terminal when location information of the predetermined mobile terminal is required; and
a multicast server which receives said location inquiring message from said location information management server and multicasts said location inquiring message to said plurality of relay stations.

10. The location information management system according to claim 9, wherein
said location inquiring message includes identification information for identifying said predetermined mobile terminal.

11. The location information management system according to claim 10, wherein
said identification information is a multicast group address which is given to a multicast group including said predetermined mobile terminal.

12. The location information management server comprising:
a transmission unit which multicasts a location inquiring message for inquiring a location of a predetermined mobile terminal to a plurality of relay stations when location information of said predetermined mobile terminal is required;
a reception unit which receives a response message to said location inquiring message from said predetermined mobile terminal; and
an update unit which updates location information of said predetermined mobile terminal according to said response message.

13. The location information management server according to claim 12, wherein
said location inquiring message includes identification information for identifying said predetermined mobile terminal.

14. The location information management server according to claim 13, wherein
said identification information is a multicast group address which is given to a multicast group including said predetermined mobile terminal.

15. The location information management server according to claims 12 to 14, wherein
when receiving a request for requesting location information on said predetermined mobile terminal from another terminal, said transmission unit multicasts said location inquiring message for inquiring location information on said predetermined mobile terminal to said plurality of relay stations.

16. The location information management server according to claim 15, wherein
said another terminal is operated by a person in an office and said predetermined mobile terminal is carried by another person who is out.

17. The location information management server according to claim 15, wherein
said another terminal is operated by a customer and said predetermined mobile terminal is carried by a driver who delivers an item to be delivered to a customer.

18. The location information management server according to claim 15, wherein
said another terminal is operated by a teacher and said predetermined mobile terminal is carried by a student.

19. The location information management server according to claims 12 to 18, wherein
said multicast transmission is performed by using MBS (Multicast-Broadcast-System) in WiMAX (Worldwide Interoperability for Microwave Access) and IEEE802.16e standard specification.

20. A method for managing location information of a mobile terminal, comprising:
multicasting a location inquiring message for inquiring a location of a predetermined mobile terminal to a plurality of relay stations from a location information management server when location information on said mobile terminal is required;
transmitting said location inquiring message to all mobile terminals in a communication zone which each of said plurality of relay stations covers when each of said plurality of relay stations receives said location inquiring message from said location information management server;
transmitting a response message to said location inquiring message from said predetermined mobile terminal to said location information management server via a relay station when said predetermined mobile terminal exists in a communication zone which said plurality of relay station covers; and
updating location information of said predetermined mobile terminal according to said response message.

21. The method for managing location information of a mobile terminal according to claim 20, wherein
said location inquiring message includes identification information for identifying said predetermined mobile terminal.

22. The method for managing location information of a mobile terminal according to claim 21, wherein
said identification information is a multicast group address which is given to a multicast group including said predetermined mobile terminal.
